# DEMANDE DE BREVET EUROPEEN

(11) **EP 1 282 185 A2**
(43) Date de publication de la demande: **05.02.2003**
(21) Numéro de dépôt: 02291847.8
(22) Date de dépôt: 22.07.2002
(51) Int. Cl.: H01M 8/10, C25B 9/10

(54) **Procédé de réalisation d'une pile à combustible à géometrie cylindrique**

(30) Priorité: 24.07.2001 FR 0109849
(71) Demandeur: COMMISSARIAT A L'ENERGIE ATOMIQUE, 75752 Paris Cédex 15 (FR)
(72) Inventeur: Marsdacq, Didier, 38000 Grenoble (FR); Laurent, Jean-Yves, 38640 Claix (FR); Bloch, Didier, 38330 Biviers (FR); Nayoze, Christine, 38600 Fontaine (FR)
(74) Mandataire: Ilgart, Jean-Christophe

(57) **Abrégé**

L'invention a trait à un procédé de réalisation d'un assemblage électrode-membrane-électrode sur substrat cylindrique (1), caractérisé en ce que l'on réalise l'assemblage électrode-membrane-électrode par dépôt successif d'une couche d'électrode (2,3), d'une couche de membrane (4) et d'une couche d'électrode (5,6) autour dudit substrat cylindrique, ledit substrat étant constitué d'un matériau apte à être totalement ou partiellement éliminé, au cours d'une étape d'élimination, en fin dudit procédé.
L'invention a également pour trait à un assemblage électrode-membrane-électrode obtenu par ledit procédé et à une pile à combustible de faible ou moyenne puissance comportant au moins un tel assemblage électrode-membrane-électrode.

## Description

### DOMAINE TECHNIQUE

La présente invention a trait à un procédé de réalisation d'une architecture de pile à combustible, plus particulièrement d'un assemblage électrode-membrane-électrode.

L'invention a également trait à une pile incorporant un tel assemblage.

De façon générale, une pile à combustible est constituée d'une association de cellules élémentaires (chacune des cellules élémentaires représentant un assemblage électrode-membrane-électrode), résultant d'un empilement de couches. Ces couches sont constituées de couches d'électrode et de couches d'électrolyte (dites couches de membrane, lorsque l'électrolyte est un polymère solide). Chaque couche d'électrode peut elle-même être composée de trois couches minces :
- une couche de diffusion, généralement en carbone poreux, servant d'amenée de courant et de support mécanique à l'électrode et permettant une bonne répartition des réactifs vers la couche active ;
- une couche active, où s'effectue la réaction électrochimique et généralement constituée de poudre de carbone supportant les particules de catalyseur, le tout imprégné d'un polymère conducteur, par exemple, protonique afin de favoriser l'apparition des points triples.
- une couche collectrice de courant en matériau métallique permettant la circulation du courant vers le circuit extérieur.

### ETAT DE LA TECHNIQUE ANTERIEURE

Dans le domaine des piles à combustible, plusieurs réalisations ont déjà été proposées.

Les piles à combustible de moyenne puissance, soit 10 à 50 kW par cellule, sont généralement élaborées par l'association "filtre-presse" de plaques bipolaires en graphite ou en acier inoxydable et d'assemblages électrode-membrane-électrode obtenus par pressage de deux électrodes en tissu et d'une membrane conductrice protonique en NAFION®.

Les piles à combustible de petite puissance, soit 0.5 à 50 W par cellule, dites micro-piles à combustible, nécessitent, pour leur élaboration le développement d'architectures et de procédés, souvent dérivés des technologies de la microélectronique. La difficulté réside dans l'assemblage de la micro-électrode avec le film mince de conducteur ionique. De plus, l'électrode, en plus de sa taille réduite, doit présenter une conductivité électronique élevée, une forte perméabilité au gaz notamment à l'hydrogène, dans le cas d'une architecture PEMFC, pour les piles à hydrogène/air, une forte perméabilité au gaz et au méthanol dans les cas d'une architecture DMFC pour les piles à méthanol/air, une aptitude à être mise sous forme d'une couche mince sur une faible surface, une bonne résistance thermomécanique. La micro-électrode doit également posséder une surface adaptée au dépôt d'un catalyseur sous forme dispersée.

Dans la littérature, on distingue des architectures à base de silicium poreux sur lequel sont déposés successivement un catalyseur puis une membrane Nafion® pour former l'assemblage électrode-membrane. Toutefois, les performances d'un tel dispositif sont limitées par la mauvaise cohésion des différentes couches, créant ainsi une forte résistance d'interface, et par une très faible dispersion du catalyseur, ce dernier étant faiblement divisé, afin d'obtenir un dépôt fortement conducteur électronique.

Différents laboratoires ont développé des technologies sur silicium non poreux. Une équipe du Lawrence Livermore National Laboratory a élaboré une cellule de micro-pile à combustible en déposant, tout d'abord, une couche mince métallique de nickel faisant office de collecteur électronique sur un substrat silicium. Le catalyseur puis le conducteur protonique sont ensuite déposés sur le nickel. Le nickel est alors perforé par gravure chimique pour mettre en contact le catalyseur et le réducteur, à savoir l'hydrogène ou le méthanol suivant le systéme de pile à combustible envisagé. Cette technique présente un certain nombre d'inconvénients, liés en particulier aux propriétés du nickel. En effet, le nickel présente une sensibilité aux phénomènes de corrosion engendrés par le caractère fortement acide du conducteur protonique. Le catalyseur se disperse, de plus, faiblement au niveau de la couche de nickel perforé, qui présente une faible capacité à entraîner une dispersion homogène de l'agent réducteur sur le catalyseur. Enfin, cette technologie engendre une faible probabilité de présence de points triples.

Le demande de brevet WO 97/11503 et le brevet américain 5,759,712 décrivent une architecture de pile à combustible basée sur l'emploi d'un micro-poreux imprégné de conducteur protonique comme élément central d'un système de micro-pile à combustible. Les différents matériaux nécessaires à la formation d'une pile à combustible sont alors déposés de part et d'autre de ce substrat par des techniques classiques de dépôt sous vide. Cette invention a deux inconvénients principaux qui sont d'une part, la fragilité du substrat polymère surtout lorsque celui-ci est traité par des techniques de dépôt sous vide agressives et d'autre part, les mauvaises performances électrochimiques liées notamment au manque de surface active et également, à la fragilité du dépôt de catalyseur effectué directement sur les membranes échangeuses de protons.

L'ensemble de ces architectures exposées présente la particularité d'être toutes planaires et ne permet pas, de ce fait, d'obtenir une surface d'électrode suffisamment élevée pour alimenter en énergie des dispositifs électroniques portables.

Dans cet objectif, plusieurs géométries non planaires sont proposées dans l'art antérieur.

Les brevets américains 6,080,501, 6,007,932 et 6,001,500 décrivent une architecture cylindrique de pile à combustible miniature. Cette architecture est basée sur l'enroulement d'un assemblage électrode-membrane-électrode employé classiquement en géométrie planaire autour d'un mandrin en mousse métallique. Toutefois, les performances d'un tel assemblage sont limitées principalement pour deux raisons :
- l'assemblage électrode-membrane-électrode, initialement planaire, n'est pas adapté à une géométrie cylindrique, ce qui occasionne une quasi impossibilité à rétablir les contacts anode-anode, cathode-cathode et membrane-membrane après enroulement de l'assemblage électrode-membrane-électrode planaire ;
- les collecteurs de courant ne sont pas intimement en contact avec l'anode et la cathode, générant ainsi des résistances d'interface trop élevées.

Une autre équipe américaine a développé un concept de pile à combustible miniature tubulaire similaire. Un assemblage électrode-membrane-électrode est enroulé pour former un cylindre. Celui-ci est ensuite intégré dans un dispositif métallique de "porte-cylindres" permettant d'assurer la collection du courant électrique. Toutefois, ce type d'architecture n'est pas adapté aux appareils électroniques portables principalement à cause de l'encombrement généré, par l'utilisation du système de "porte-cylindres".

### EXPOSÉ DE L'INVENTION

Le but de la présente invention est de remédier aux inconvénients ci-dessus en proposant un procédé de préparation d'un assemblage électrode-membrane-électrode, destiné à entrer dans la constitution de pile à combustible à membrane, de faible ou moyenne puissance, permettant d'obtenir une surface d'électrode élevée dans un volume réduit.

La présente invention a également pour but de proposer un procédé permettant d'obtenir un assemblage électrode-membrane-électrode avec de bons contacts électriques, remédiant ainsi aux inconvénients de l'art antérieur pour une architecture de type cylindrique et permettant d'obtenir une zone de distribution des réactifs à l'issue dudit procédé.

Enfin, un autre but de l'invention est de fournir des assemblages électrode-membrane-électrode, de taille réduite, destinés à entrer dans la constitution de piles à combustible, en vue d'alimenter des équipements électroniques portables.

Pour ce faire, l'invention a pour objet un procédé de réalisation d'un assemblage électrode-membrane-électrode sur un substrat cylindrique, caractérisé en ce que l'on réalise l'assemblage électrode-membrane-électrode par dépôt successif d'une couche d'électrode, d'une couche de membrane et d'une couche d'électrode autour dudit substrat cylindrique, ledit substrat étant constitué d'un matériau apte à être totalement ou partiellement éliminé, au cours d'une étape d'élimination, en fin dudit procédé.

Selon l'invention, le substrat cylindrique peut être réalisé en un matériau organique. De préférence, le substrat cylindrique est obtenu, dans ce cas, par extrusion d'un polymère ou d'un mélange de polymères. Selon un autre mode de réalisation de l'invention, le substrat peut être réalisé en un matériau minéral.

En fin de procédé, ledit substrat est, selon l'invention, éliminé partiellement ou totalement par un traitement chimique ou traitement thermique, approprié à la constitution du substrat.

Selon l'invention, le traitement chimique peut viser, également, à traiter la membrane, afin de la préparer à la conduction ionique.

En d'autres termes, ce traitement chimique, destiné à éliminer totalement ou partiellement le substrat cylindrique, peut également rendre conductrice la membrane, c'est-à-dire en transformant des groupements initialement non conducteurs de cette membrane en groupement ionique apte à assurer la conduction ionique (par exemple, la conduction des protons dans le cas des piles à hydrogène).

Selon l'invention, le dépôt des couches d'électrode peut comporter le dépôt d'une couche de diffusion réalisée, de préférence, par le dépôt d'un matériau poreux, ledit matériau étant, de préférence, imprégné d'un polymère hydrophobe.

Selon l'invention, le matériau poreux constituant, en partie, la couche de diffusion, est réalisée, de préférence, en graphite.

Le dépôt des couches d'électrode comporte, avantageusement, le dépôt d'une couche active réalisée, de manière préférentielle, par dépôt d'une couche de catalyseur sur ladite couche de diffusion, ledit catalyseur se présentant, par exemple, sous forme de grains de métal noble (c'est-à-dire un métal pouvant être choisi parmi le platine, le palladium, l'argent, l'or). Cette couche active peut être, avantageusement, imprégné d'un polymère conducteur, par exemple, protonique de structure identique à la membrane. De préférence, le métal noble utilisé est le platine.

Selon l'invention, la dépôt de la couche de membrane, ladite membrane étant intercalée entre les électrodes, est réalisé par dépôt d'un polymère conducteur, par exemple, protonique ou susceptible de le devenir par un traitement approprié.

En outre, le procédé de réalisation d'un assemblage électrode-membrane-électrode, selon l'invention, peut comporter une étape de dépôt d'un collecteur de courant au niveau de chacune des couches d'électrode. Selon un premier mode de réalisation de l'invention, ce dépôt est réalisé par un dépôt métallique, de préférence, en spirale, au niveau de chacune des couches d'électrode. Selon un second mode de réalisation de l'invention, la mise en place du collecteur de courant s'effectue par un enroulement de micro-filaments métalliques autour de chacune des couches d'électrode. Enfin, selon un troisième de réalisation, ce dépôt métallique peut être réalisé par maillage de tissu métallique, au niveau de chaque couche d'électrode.

L'invention a aussi pour objet l'assemblage électrode-membrane-électrode obtenu par le procédé comportant les caractéristiques précédemment énoncées.

L'invention concerne également une pile à combustible comportant, au moins, un assemblage électrode-membrane-électrode obtenu par ce même procédé.

Ce procédé présente l'avantage de permettre de réaliser des assemblages électrode-membrane-électrode à volume réduit. Ce type d'architecture est donc adapté à l'alimentation des appareils électroniques portables, du fait du gain de place généré par les assemblages électrode-membrane-électrode, de taille réduite, issus du procédé.

Un autre avantage réside dans le fait d'utiliser, dans le cadre de ce procédé, un support partiellement ou totalement éliminable, que l'on rend poreux ou que l'on élimine totalement en fin de procédé. Cette porosité ou cet espace vide (selon que l'élimination est partielle ou totale) permet de constituer une chambre de distribution des réactifs destinée à alimenter en réactifs l'électrode déposée directement sur le substrat. Ainsi, pour une pile du type PEMFC (« Proton Exchange Membrane Fuel Cell »), la porosité ou l'espace vide créé par le traitement final du substrat cylindrique permet l'alimentation, par exemple, de l'anode en hydrogène.

Un avantage réside, également, dans la simplicité de réalisation du procédé, qui nécessite uniquement l'utilisation de techniques classiques de dépôt, telles que, par exemple, la pulvérisation, le trempage.

D'autres caractéristiques et avantages de l'invention apparaîtront dans la description détaillée, non limitative, ci-dessous.

### BREVE DESCRIPTION DES DESSINS

Cette description sera faite en regard des dessins annexés parmi lesquels :
- la figure 1 représente schématiquement la succession de couches déposées au niveau du substrat cylindrique, ladite succession de couches constituant, ainsi, un assemblage électrode-membrane-électrode ; et
- la figure 2 représente une vue schématique d'une association de plusieurs assemblages électrode-membrane-électrode, obtenus selon le procédé de l'invention, ces assemblages étant disposés en série, afin de former une pile à combustible portable.

### EXPOSE DETAILLE DE L'INVENTION

Selon l'invention, l'assemblage électrode-membrane-électrode est réalisé par dépôt successif d'une couche d'électrode, d'une couche de membrane suivie, enfin d'une couche d'électrode au niveau d'un substrat cylindrique, ledit substrat étant partiellement ou totalement éliminable par un traitement approprié en fin de procédé.

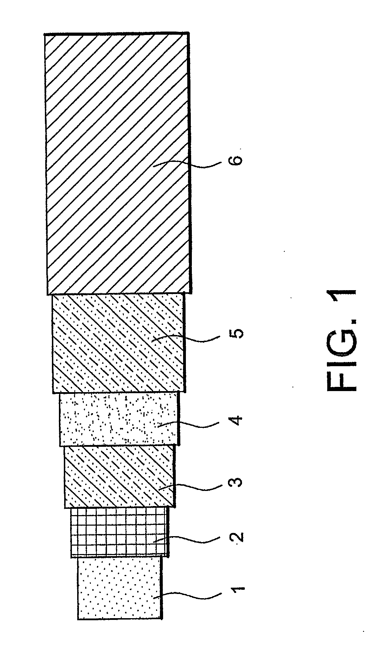

La figure 1 représente une telle disposition des couches, disposition obtenue par dépôt des différentes couches dans un ordre déterminé.

Ainsi, dans un premier temps, une couche de matériau poreux, par exemple, du graphite, imprégné d'un polymère hydrophobe, tel que, par exemple, le PVDF (polyfluorure de vinylidène) est appliquée au niveau d'un substrat cylindrique 1 rigide. Ce substrat est constitué, selon un mode particulier de l'invention en matériau polymère. A ce moment-là, le substrat peut être obtenu par extrusion d'un polymère ou d'un mélange de polymères. Le matériau constitutif du substrat cylindrique peut être, par exemple, constitué d'un mélange polypropylène/polyamide, le polyamide étant éliminé en phase finale du procédé par une solution acide, ou peut être constitué d'un seul polymère tel que , par exemple, le polyalphaméthylstyrène. Il peut être, également, réalisé en matériau minéral, tel que, par exemple le chlorure de sodium, éliminable par un lavage à l'eau.

La caractéristique fondamentale de l'invention réside, ainsi, dans le fait qu'au moins un des constituants du matériau organique ou minéral, entrant dans la constitution du substrat, puisse être éliminé lors d'un traitement en fin de procédé, afin d'obtenir un substrat poreux ou un espace vide (selon que l'élimination est partielle ou totale). Par exemple, on peut envisager un mélange de polymères, ou d'espèces minérales, comportant au moins un composant soluble, par exemple, en solution aqueuse acide ou dans un solvant organique, permettant d'éliminer ainsi ce composant par une simple phase de lavage, ou un composant thermiquement labile, éliminable alors par une phase de chauffage. L'espace poreux ou l'espace vide obtenu permet d'alimenter en réactif l'électrode, qui est directement en contact avec le substrat cylindrique. Cette porosité (lorsque l'élimination est partielle) se situe, par exemple, entre 40 et 60% et contribue à former des cavités ou des entrelacs de canaux, facilitant ainsi la circulation du combustible.

La couche de matériau poreux, par exemple en graphite, constitue la première partie de l'électrode, dite couche de diffusion. Cette couche permet d'assurer, outre des fonctions de support mécanique de l'électrode et d'amenée de courant, la diffusion des réactifs en direction de la partie active de l'électrode. Cette couche est déposée par des techniques classiques de mise en oeuvre des couches minces, telles que la pulvérisation du graphite en phase liquide ou le trempage.

Cette couche de matériau poreux présente, de préférence, une bonne conductivité électrique, de l'ordre de 50 S/cm, une porosité de l'ordre de 70 %, ainsi qu'une maîtrise parfaite de l'hydrophilicité et de la rugosité. L'hydrophilicité est liée, dans le cadre de l'invention, à la présence d'un liant hydrophobe dans la formulation du graphite. Ce liant est, par exemple, un dérivé du Téflon® ou du PVDF (polyfluorure de vinylidène) et se trouve, par exemple, dans une proportion de 2 à 8 % par rapport à la masse de matériau de poreux constitutif de la couche de diffusion. Quant à la rugosité, elle est liée directement à la dimension des particules de matériau poreux, par exemple de graphite, cette dimension étant, par exemple, de l'ordre de 2 à 40 µm de diamètre. La structure particulière de cette couche poreuse doit permettre également de déposer, sans difficulté majeure, le catalyseur (pour former la couche active) et surtout d'élaborer par dessus une couche mince, par exemple, de l'ordre de 5 à 20 µm de conducteur ionique homogène et imperméable aux gaz, cette couche mince constituant la membrane de l'assemblage.

Afin d'assurer une bonne conductivité de la pile à combustible, notamment, lorsque la couche de diffusion poreuse et la couche active ne sont pas suffisamment conductrices, il est nécessaire de collecter les électrons d'une extrémité à l'autre du cylindre via un collecteur de courant. Selon la figure 1, le collecteur de courant 2 peut être réalisé, par exemple, sous forme de dépôt métallique, par des méthodes classiques de dépôt sous vide, telles que la PVD ou CVD (« Physical Vapor Deposition » ou « Chemical Vapor Deposition »), ce dépôt se faisant, de préférence, en spirale, de manière à balayer toute la longueur du cylindre.

Le dépôt métallique peut être substitué, selon une variante de l'invention, par un enroulement de micro-filaments métalliques autour du cylindre. Ces filaments pourront également être employés pour stabiliser la structure complète c'est-à-dire l'association de l'ensemble des assemblages électrode-membrane-électrode pour former une pile à combustible miniature adaptée aux équipements portables.

On peut également envisager d'utiliser un maillage de tissu métallique. Les fils utilisés à la fois pour l'enroulement et pour la fabrication du tissu métallique sont, par exemple, des fils d'acier inoxydable, d'or ou de platine.

Sur la couche de matériau poreux, définissant la couche de diffusion, le catalyseur, se présentant, par exemple, sous forme de grains de métal noble, tels que, par exemple, des grains de platine, est déposé suivant des techniques classiques, c'est-à-dire par trempage ou pulvérisation d'une encre active. Bien entendu, les techniques de dépôt du catalyseur par réduction électrochimique ou chimique d'un sel de catalyseur sont envisageables. Cette couche de catalyseur constitue la couche active, où s'effectue la réaction électrochimique. L'ensemble collecteur de courant-couche de diffusion-couche active constitue une électrode. Selon la figure 1, les couches 2,3 représentent l'anode de l'assemblage électrode-membrane-électrode (c'est-à-dire une anode constituée d'un collecteur de courant, d'une couche de diffusion et d'une couche active), qui sera alimentée en combustible par l'intermédiaire du substrat 1 devenu poreux ou transformé en espace vide en fin de procédé. En surface de la couche active, on applique, le plus souvent, une fine couche de polymère conducteur, par exemple, protonique, de structure identique à la membrane, de manière à faciliter le transport ionique, tel que le transport des ions H+ dans le cas d'une pile PEMFC.

Une fine membrane de conducteur 4, par exemple, protonique, est ensuite déposée à la surface du cylindre par des techniques classiques, telles que, par exemple, la pulvérisation ou le trempage. Le dépôt peut être envisagé, également, par sublimation de précurseurs organiques, telle que, par exemple, la sublimation de diamines et de dianhydrides, pour former des polyimides. L'ensemble des polymères conducteurs ioniques ou susceptible de le devenir, par traitement, par exemple, par des agents de sulfonation solubles est adapté à cette architecture.

Par exemple, le polymère constituant la membrane peut être choisi parmi les polymères fluorés ou perfluorés sulfonés, les polyimides sulfonées, les polyéthersulfones sulfonées, les polystyrènes sulfonés et leurs dérivés sulfonés, les polyéthercétones sulfonés et leurs dérivés sulfonés, les polybenzoaxoles sulfonés, les polybenzimidazoles sulfonés et leurs dérivés sulfonés, les polyarylènes sulfonés tels que les paraphénylènes et polyparaxylylènes sulfonés et leurs dérivés sulfonés.

Une nouvelle couche de matériau poreux 5, tel que, par exemple, le graphite, imprégné de catalyseur (constituant ainsi couche de diffusion et couche active de l'autre électrode) est alors déposée sur la membrane pour constituer, avec le collecteur de courant 6 l'électrode périphérique, qui constituera la cathode 5,6 de l'assemblage, selon ce mode particulier de réalisation de l'invention. Le collecteur de courant 6, au niveau de la cathode est réalisé à nouveau par dépôt métallique, par exemple, en spirale ou par enroulement de micro-filaments métalliques ou encore par maillage de tissu métallique.

Au terme de ces opérations, l'assemblage électrode-membrane-électrode obtenu est traité chimiquement ou thermiquement afin d'éliminer au moins un composant du matériau employé pour la constitution du support cylindrique.

Ce traitement peut servir, à la fois, de traitement pour obtenir un substrat cylindrique poreux et de traitement pour préparer la membrane à véhiculer, notamment, les protons H+ pour les piles PEMFC, de l'anode vers la cathode. A l'issue du procédé, on obtient des assemblages électrode-membrane-électrode sous forme de tubes de petit diamètre, de l'ordre du millimètre, ces tubes constituant les éléments de base, ou coeurs de pile entrant dans la constitution des piles à combustible.

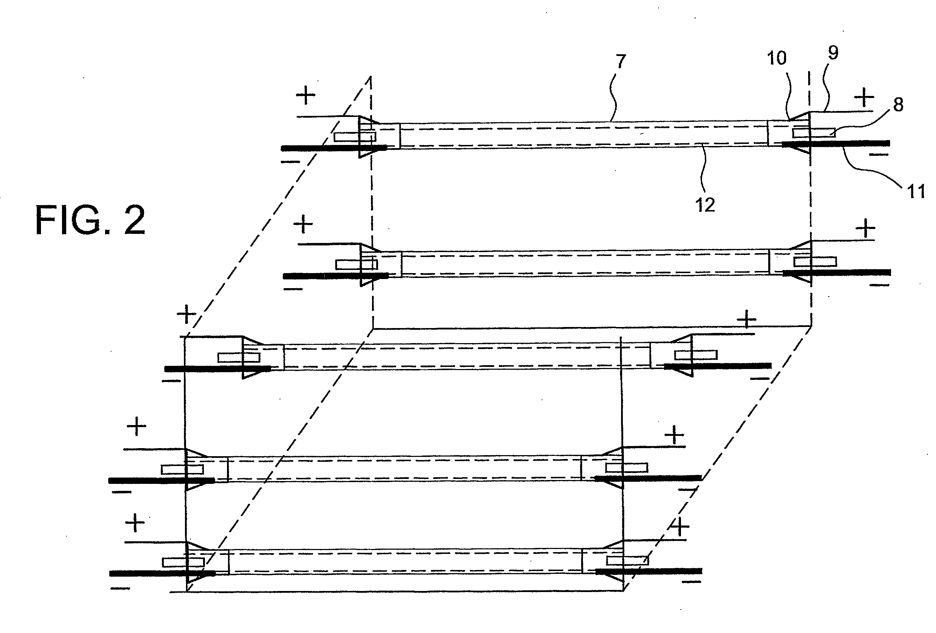

La figure 2 représente une telle pile à combustible constituée de plusieurs assemblages électrode-membrane-électrode, montés en série, les connexions électriques permettant ce montage étant, par exemple, réalisées par des filaments métalliques issus des diférents collecteurs de courant. L'assemblage 7 est relié aux parois de la pile par l'intermédiaire de supports 8. Des fils conducteurs 9 sont en contact avec la face extérieure 10 de l'assemblage électrode-membrane-électrode 7, cette face correspondant à la cathode. Ce contact est établi à chaque extrémité de l'assemblage électrode-membrane-électrode 7. De même, des fils conducteurs 11 sont en contact avec la face intérieure 12 de l'assemblage électrode-membrane-électrode 7, cette face correspondant à l'anode. Ces contacts électriques sont assurés au niveau de chaque assemblage électrode-membrane-électrode, entrant dans la constitution de la pile à combustible. Ces contacts sont destinés, évidemment, à assurer la circulation de l'énergie électrique créée au niveau des assemblages. Le combustible, tel que l'hydrogène pour les piles PEMFC ou le méthanol pour les piles DMFC, circule au coeur de l'assemblage électrode-membrane-électrode, dans l'espace libérée par traitement du substrat cylindrique, afin d'être en contact avec l'anode, alors que le comburant, tel que l'oxygène, circule entre les différents éléments de base et est en contact avec les cathodes.

Cette invention s'applique aussi bien à des systèmes de pile à combustible fonctionnant soit avec un mélange hydrogène/oxygène pour les piles PEMFC, soit avec un mélange méthanol/oxygène pour les piles DMFC. L'invention s'applique, également, aussi bien à des piles à combustible à puissance moyenne qu'à petite puissance. Le procédé est, toutefois, particulièrement adapté à la réalisation de micro-systèmes de pile à combustible pour des applications dans le domaine des micro-sources d'énergie portable.

Avec le procédé explicité précedemment, grâce à la réalisation de micro-tubes de 0.5 à 1 mm de diamètre, on peut envisager des architectures dont le volume est proche de 7.5 cm³, au sein de laquelle la surface active est comprise entre 130 et 250 cm².

### Exemple de réalisation d'un assemblage électrode-membrane-électrode, selon l'invention.

Dans une première étape, le substrat cylindrique est obtenu par extrusion d'un mélange 50-50 de polypropylène et d'un polyamide à 200°C, de façon à obtenir un tube de diamètre environ égal à 500 µm.

Sur le substrat cylindrique nouvellement formé, on effectue le dépôt d'un collecteur de courant métallique par voie PVD (« Physical Vapor Deposition ») à partir d'une cible de platine. Le dépôt obtenu est une couche mince d'épaisseur 5000 Å.

Puis on effectue le dépôt de la couche de diffusion par trempage dans une formulation de graphite (95 % de matière sèche), de PVDF (5 % de matière sèche) et de solvant, tel que le THF, la matière sèche correspondant à 20% de la matière totale. L'ensemble est séché une heure à 70°C.

Sur la couche de diffusion est pulvérisée une encre active, à base de carbone platiné et de Nafion®, avec un chargement en platine de 0.2 mg/cm² et un rapport Platine/Nafion® égal à 1. On obtient ainsi une couche active.

On dépose la membrane par trempage dans une solution de Nafion® à 15%, et on place le tout 3 heures à l'étuvage à 100°C.

On procéde ensuite au dépôt de l'autre électrode, de la même façon que pour la première électrode, à savoir par dépôt de la couche de diffusion, de la couche active et du collecteur de courant.

Une fois les phases de dépôt achevées, on traite l'ensemble dans l'acide sulfurique 10N à 70°C pour dissoudre le polyamide constitutif du substrat et rendre la membrane conductrice.

Bien entendu, diverses modifications peuvent être apportées par l'homme de l'art au procédé qui vient d'être décrit, uniquement à titre d'exemple non limitatif, sans sortir du cadre de protection défini par les revendications annexées.

## Revendications

1. Procédé de réalisation d'un assemblage électrode-membrane-électrode sur substrat cylindrique, **caractérisé en ce que** l'on réalise l'assemblage électrode-membrane-électrode par dépôt successif d'une couche d'électrode, d'une couche de membrane et d'une couche d'électrode autour dudit substrat cylindrique, ledit substrat étant constitué d'un matériau apte à être totalement ou partiellement éliminé, au cours d'une étape d'élimination, en fin dudit procédé.

2. Procédé de réalisation d'un assemblage électrode-membrane-électrode selon la revendication 1, **caractérisé en ce que** le substrat cylindrique est réalisé en matériau organique.

3. Procédé de réalisation d'un assemblage électrode-membrane-électrode selon la revendication 2, **caractérisé en ce que** le substrat cylindrique est réalisé par extrusion d'un polymère ou d'un mélange de polymères.

4. Procédé de réalisation d'un assemblage électrode-membrane-électrode selon la revendication 1, **caractérisé en ce que** le substrat cylindrique est réalisé en matériau minéral.

5. Procédé de réalisation d'un assemblage électrode-membrane-électrode selon les revendications 1 à 4, **caractérisé en ce que** l'étape d'élimination totale ou partielle du substrat cylindrique s'effectue par traitement chimique ou thermique.

6. Procédé de réalisation d'un assemblage électrode-membrane-électrode selon la revendication 5, **caractérisé en ce que** le traitement chimique, en fin de procédé, vise, en outre, à traiter la membrane, afin de la préparer à la conduction ionique.

7. Procédé de réalisation d'un assemblage électrode-membrane-électrode selon la revendication 1, **caractérisé en ce que** le dépôt des couches d'électrode comprend le dépôt d'une couche de diffusion réalisé, de préférence, par dépôt d'un matériau poreux, ledit matériau étant, de préférence, imprégné d'un polymère hydrophobe.

8. Procédé de réalisation d'un assemblage électrode-membrane-électrode selon la revendication 7, **caractérisé en ce que** le matériau poreux, constituant la couche de diffusion, est réalisé en graphite.

9. Procédé de réalisation d'un assemblage électrode-membrane-électrode selon la revendication 7 ou 8, **caractérisé en ce que** le dépôt des couches d'électrodes comprend le dépôt, sur ladite couche de diffusion, d'une couche active réalisée par dépôt d'une couche de catalyseur, de préférence, sous forme de grains de métal noble.

10. Procédé de réalisation d'un assemblage électrode-membrane-électrode selon la revendication 9, **caractérisé en ce que** le métal noble utilisé est le platine.

11. Procédé de réalisation d'un assemblage électrode-membrane-électrode selon l'une quelconque des revendications précédentes, **caractérisé en ce que** le dépôt de la couche de membrane est réalisé par dépôt d'un polymère conducteur, par exemple, protonique, ou susceptible de le devenir.

12. Procédé de réalisation d'un assemblage électrode-membrane-électrode selon l'une quelconque des revendications précédentes, **caractérisé en ce que** le procédé comporte, en outre, une étape de réalisation d'un collecteur de courant au niveau de chacune des couches d' électrode.

13. Procédé de réalisation d'assemblage électrode-membrane-électrode selon la revendication 12, **caractérisé en ce** le collecteur de courant est réalisé par dépôt métallique, de préférence, en spirale, au niveau de chacune des couches d'électrode.

14. Procédé de réalisation d'un assemblage électrode-membrane-électrode selon la revendication 12, **caractérisé en ce que** le collecteur de courant est réalisé par enroulement de micro-filaments métalliques au niveau de chacune des couches d'électrode.

15. Procédé de réalisation d'un assemblage électrode-membrane-électrode selon la revendication 12, **caractérisé en ce que** le collecteur de courant est réalisé par maillage de tissu métallique, au niveau de chacune des couches d'électrode.

16. Assemblage électrode-membrane-électrode susceptible d'être obtenu par le procédé selon l'une quelconque des revendications précédentes.

17. Pile à combustible comportant au moins un assemblage électrode-membrane-électrode selon la revendication 16.
